# EUROPEAN PATENT APPLICATION

(11) **EP 1 918 411 A2**
(43) Date of publication of application: **07.05.2008**
(21) Application number: 07117608.5
(22) Date of filing: 01.10.2007
(51) Int. Cl.: C23C 4/02, C23C 4/06, C23C 14/24, C23C 14/58, C25D 3/50, C25D 3/52, C25D 7/10

(54) **Coated turbine engine components and methods for making the same**

(30) Priority: 03.10.2006 US 542444
(71) Applicant: General Electric Company, Schenectady, NY 12345 (US)
(72) Inventor: ZIMMERMAN, Jr., Robert George, Morrow, OH 45152 (US); ACKERMAN, John Frederick, Laramie, WY 82070 (US); HEANEY, Joseph Aloysius, Middletown, OH 45044 (US); NAGARAJ, Bangalore Aswatha, West Chester, OH 45069 (US); WEIMER, Michael James, Loveland, OH 45140 (US)
(74) Representative: Szary, Anne Catherine

(57) **Abstract**

Methods for coating a turbine engine rotor component involving depositing at least one platinum group metal selected from platinum, palladium, rhodium, ruthenium, iridium and osmium on the rotor component, and heating the rotor component to a temperature of from about 500°C to about 800°C.

## Description

### TECHNICAL FIELD

Embodiments described herein generally relate to methods of forming a protective coating on turbine engine components, such as turbine engine rotor components. Also described herein are embodiments generally relating to coated turbine engine rotor components.

### BACKGROUND OF THE INVENTION

In gas turbine engines, such as aircraft engines, air is drawn into the front of the engine, compressed by a shaft-mounted compressor, and mixed with fuel in a combustor. The mixture is then burned and the hot exhaust gases are passed through a turbine mounted on the same shaft. The flow of combustion gas expands through the turbine, which, in turn, turns the shaft and provides power to the compressor. The hot exhaust gases are further expanded through nozzles at the back of the engine, generating thrust to drive the aircraft forward. The hotter the combustion and exhaust gases, the more efficient the operation of the aircraft engine. Thus, there is a benefit to having elevated combustion and exhaust gas temperatures.

Turbine engines generally include turbine rotors, which may include disks, seal elements and blade retainers, among other components. Turbine disks generally have numerous blades mounted to them that extend radially outwardly therefrom into the gas flow path. Seal elements, which can be both rotating and static, can channel airflow and prevent hot combustion gases from contacting the turbine shaft and related components. Blade retainers are used to retain the blades within the disks. As the operating temperature of the turbine engine increases, the disks, seal elements and blade retainers are, in turn, subjected to higher temperatures. As a result, oxidation and corrosion of these components may become of greater concern as such elevated temperatures may accelerate these processes and necessitate premature removal and replacement of the components.

Currently, turbine disks, seal elements and blade retainers for use at elevated operating temperatures (i.e. above about 540°C) may be constructed from nickel-based superalloys, which can provide increased toughness and fatigue resistance as they can resist oxidation and corrosion damage better than other alloys. However, these properties alone may not always be sufficient to fully protect the superalloys at the elevated temperatures often reached by today's aircraft engines. Also, because these superalloys and other rotor components may contain lower levels of aluminum and/or chromium, they may be more susceptible to corrosion. Therefore, oxidation and corrosion damage may still occur.

While a number of oxidation/corrosion-resistant coatings have been considered for use on turbine blades, current practices generally do not involve using such coatings on other turbine components, such as disks, seal elements and blade retainers. Coatings used on blades may be brittle, and when applied at thicknesses needed for other turbine components, may result in the formation of cracks in the metal substrate of the component.

Accordingly, there remains a need for methods for protecting disks, seal elements, blade retainers and other rotor components against oxidation and corrosion at elevated turbine engine operating temperatures.

### BRIEF DESCRIPTION OF THE INVENTION

Embodiments described herein generally relate to methods for coating a turbine engine rotor component involving depositing at least one platinum group metal on the rotor component and heating the rotor component to a temperature of from about 500°C to about 800°C.

Embodiments herein also generally relate to turbine engine rotor components having a metal-based substrate and a platinum group metal coating on a surface of the substrate wherein the platinum group metal coating is formed by depositing at least one platinum group metal selected from the group consisting of platinum, palladium, rhodium, ruthenium, iridium and osmium on the surface of the rotor component, and heating the rotor component to a temperature of from about 500°C to about 800°C.

Embodiments herein also generally relate to methods for protecting a turbine engine rotor component involving providing a rotor component selected from the group consisting of turbine disks, turbine seal elements, and turbine blade retainers, depositing at least one platinum group metal selected from the group consisting of platinum, palladium, rhodium, ruthenium, iridium and osmium on the rotor component by electroplating to form a coating having a thickness of from about 0.2µm to about 50µm and heating the rotor component to a temperature of from about 500°C to about 800°C.

These and other features, aspects and advantages will become evident to those skilled in the art from the following disclosure.

### BRIEF DESCRIPTION OF THE DRAWINGS

While the specification concludes with claims particularly pointing out and distinctly claiming the invention, it is believed that the embodiments set forth herein will be better understood from the following description in conjunction with the accompanying figures, in which like reference numerals identify like elements.
FIG. 1 is a schematic view of one embodiment of a portion of a turbine section of a gas turbine engine;
FIG. 2 is a schematic view of one embodiment of a protective coating deposited on a rotor component; and
FIG. 3 is a schematic view of one embodiment of an electroplating apparatus for coating turbine rotor components.

### DETAILED DESCRIPTION OF THE INVENTION

Embodiments described herein generally relate to methods for forming a protective coating on a turbine engine rotor component used at an elevated operating temperature (i.e. above about 540°C). Such methods can allow the mechanical performance of the rotor component to be optimized by using the best available alloy, and can protect that alloy against corrosion and oxidation via the application of a protective coating to the component. The protective coating is highly adhesive, does not adversely affect the properties of the underlying base metal, and is thin enough so as not to significantly alter the dimensions of the component to which it is applied. The protective coating can also be readily reconditioned and repaired if necessary. While embodiments herein may generally focus on turbine rotor components of aircraft engines, it will be understood by those skilled in the art that the description should not be limited to such.

The turbine engine rotor component may be of any type, however, methods described herein may be particularly advantageous for use with rotor components, or portions thereof, that experience a service operating temperature of from about 540°C to about 815°C. Such components may be exposed to compressor bleed air or gas path environments containing ingested corrosive agents, such as metal sulfates, sulfites, chlorides, carbonates, and the like, which can become deposited on the surface of the component over time and result in corrosion damage. Rotor components that may benefit from the methods described herein include, but are not limited to, turbine disks, turbine seal elements and turbine blade retainers. While the entire rotor component may be protected, in many cases, it may be more advantageous and cost effective to protect only selected portions of the rotor component. For example, the mid-to-outer portion of the hub of the turbine disk may be coated, while the bore region, inner portion of the hub, and blade slots may or may not be coated.

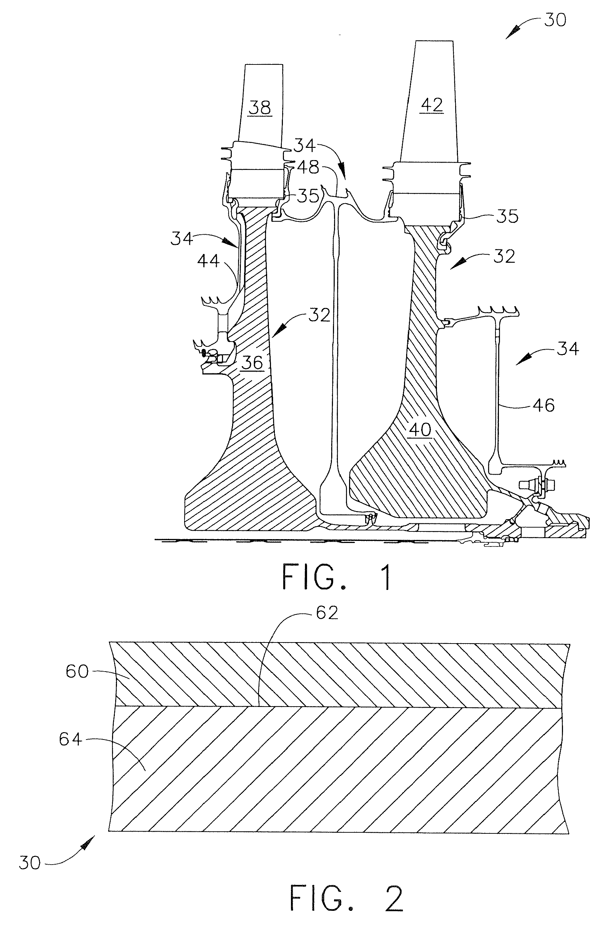

Referring to FIG. 1, a representative embodiment of a turbine engine rotor component 30 is provided. Rotor component 30 may be of any operable type, such as, for example, a turbine disk 32, a turbine seal element 34 and/or a turbine blade retainer 35. The embodiment shown in FIG.1 illustrates a first stage turbine disk 36, a first stage turbine blade 38 mounted to the first stage turbine disk 36, a second stage turbine disk 40, a second stage turbine blade 42 mounted to the second stage turbine disk 40, a forward seal 44, an aft seal 46, and an interstage seal 48. Any or all of such turbine disks, seal elements or blade retainers may be coated using the methods described herein below, depending on whether corrosion is expected or observed. Alternately, and as previously described, it may be desirable to coat only a portion of rotor component 30.

Referring to FIG. 2, metal substrate 64 of turbine rotor component 30 can comprise any of a variety of substrates, such as metals, metal alloys or metal superalloys, including those based on nickel, cobalt, iron or combinations thereof. In one embodiment, metal substrate 64 may comprise a nickel-based superalloy. As used herein, "based" indicates that the metal substrate comprises a greater percentage of the listed element(s) than any other element. (For example, the previously mentioned nickel-based superalloy comprises more nickel than any other element.) By way of example and not limitation, one nickel-based superalloy that may be used herein is Rene^{®}88 (General Electric Co.), which is generally comprised, by weight, of about 13% cobalt, about 16% chromium, about 4% molybdenum, about 3.7% titanium, about 2.1% aluminum, about 4% tungsten, about 0.70% niobium, about 0.015% boron, about 0.03% zirconium, and about 0.03 percent carbon, with the balance nickel and minor impurities.

Prior to applying protective coating 60 on surface 62 of metal substrate 64, surface 62 may be pretreated to make surface 62 more receptive for coating 60. One suitable pretreatment method is grit blasting, with or without masking of surfaces not subjected thereto. While those skilled in the art will understand the appropriate parameters for such pretreatment, in general, surface 62 of metal substrate 64 can be pretreated by grit blasting using abrasive particles, such as, silicon carbide, steel, alumina and the like. In one embodiment, the particles may be alumina particles having a particle size of from about 25µm to about 500µm. In another embodiment, the alumina particles may have a particle size of from about 35µm to about 200µm.

Regardless of whether pretreatment is employed, protective coating 60 may comprise at least one platinum group metal selected from the group consisting of platinum, palladium, rhodium, ruthenium, iridium, osmium, and combinations thereof. The platinum group metal may be deposited onto rotor component 30 by any method known to those skilled in the art, such as, for example, slurry coating, painting, physical vapor deposition, chemical vapor deposition, and metal plating (i.e. electroplating). In one embodiment, the platinum group metal may be deposited in a thickness of from about 0.2µm to about 50µm, including all subranges therebetween. However, in another embodiment the coating may have a thickness of from about 0.3µm to about 10µm, and in yet another embodiment, from about 0.5µm to about 3µm.

As previously described, in one embodiment, it may be desirable to deposit the platinum group metal on portions of surface 62 of metal substrate 64 of rotor component 30 that experience a service operating temperature of from about 540°C to about 815°C, in another embodiment from about 640°C to about 760°C, as the natural oxidation and corrosion resistance of such areas may be insufficient to provide the desired protection at elevated service operating temperatures. In contrast, portions of rotor component 30 that generally experience service operating temperatures of less than about 540°C may not need protective coating 60 as the oxidation and corrosion resistance of the materials of construction alone can provide sufficient resistance. Likewise, portions of rotor component 30 that generally experience service operating temperatures in excess of about 815°C may require more complex protective coatings, such as thicker diffusion coatings or overlay coatings, and optionally thermal barrier coatings, to help ensure adequate protection.

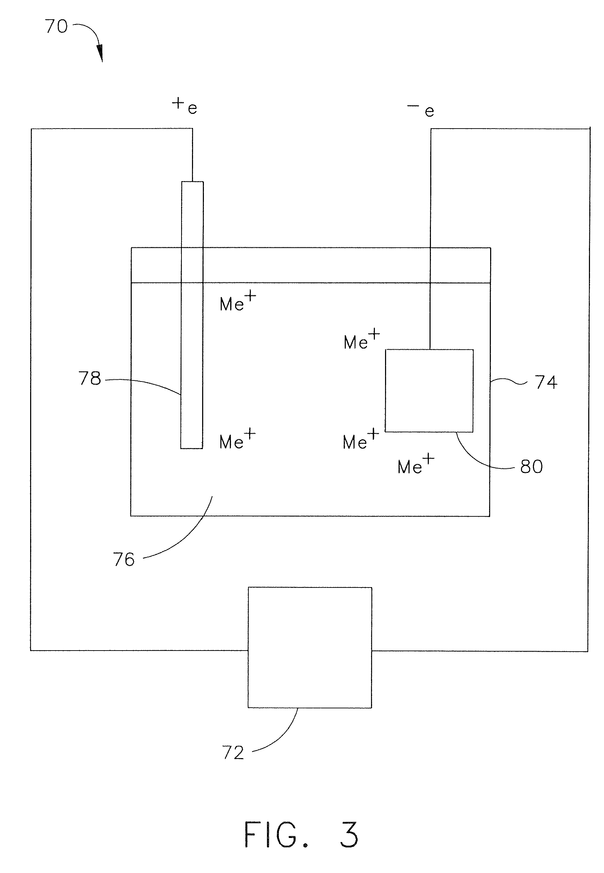

As referenced previously, in one embodiment, the platinum group metal may be deposited by any of a variety of metal plating techniques, all of which will be understood by those skilled in the art. However, FIG. 3 illustrates a representative embodiment of an electroplating apparatus 70 that may be used to carry out the deposition described herein. Electroplating apparatus 70 may include power supply 72, deposition tank 74, plating solution 76, anode 78 and cathode (which may be the component being coated/plated) 80. The designation Me⁺ refers to any metal ion having a positive charge, such as a platinum group metal. In one illustrative embodiment, platinum may be deposited onto surface 62 of metal substrate 64 by placing a platinum-comprising plating solution 76 into deposition tank 74 and depositing the platinum from the solution onto component 30 via an electroplating process. The platinum-comprising solution 76 may contain, for example, Pt(NH₃)₄HPO₄ having a concentration of from about 4g/l to about 20 g/l of platinum. Generally, the platinum-comprising solution 76 may be heated to from about 80°C to about 95°C (including all subranges therebetween), in one embodiment from about 85°C to about 90°C, and in still another embodiment to about 88°C, and the voltage/current source can be operated at from about 3100 amps/m² to about 12,400 amps/m² of component area being coated, and in one embodiment about 9300 amps/m². It will be understood that other platinum source chemicals and plating parameters known to those skilled in the art may also be used herein.

Referring again to FIG. 2, after depositing the platinum group metal on substrate 64, rotor component 30 may be heated to a temperature of from about 500°C to about 800°C, including all subranges therebetween. However, in another embodiment, the temperature may be from about 600°C to about 760°C, and in yet another embodiment, from about 640°C to about 700°C, to form protective coating 60 on surface 62 of rotor component 30. Because these temperatures are relatively low, the likelihood that there will be any distortion of the rotor component during heating is significantly reduced. Heating may be carried out in any type of atmosphere, however, in one embodiment, heating may be carried out in a nonoxidizing atmosphere, such as helium or argon. Optionally, heating may be carried out in a vacuum. Depending on the selected temperature and the composition of the rotor component, heating may occur for various lengths of time. However, in one embodiment, heating may be carried out for from about 10 minutes to about 24 hours, in another embodiment, from about 30 minutes to about 10 hours, and in still another embodiment, from about 2 hours to about 8 hours. Alternately, heating may occur simultaneously with the deposition of the platinum group metal on the surface of the rotor component.

As previously described, the deposited platinum group metal coating may provide protection against corrosion and oxidation and may have a thickness of from about 0.2µm to about 50µm and all subranges therebetween. However, in another embodiment, the coating may have a thickness of from about 0.3µm to about 10µm, and in yet another embodiment, from about 0.5µm to about 3µm.

While embodiments set forth herein are generally directed to depositing a protective coating directly on a metal substrate, it will be understood by those skilled in the art that the previously described protective coating may similarly be deposited over any preexisting corrosion resistant coating or coatings on the metal substrate.

### EXAMPLE

An electroplating tank (as illustrated in FIG. 3) was filled with a platinum plating solution of Pt(NH₃)₄HPO₄ having a concentration of from about 10g/l to about 20g/l of platinum. A test disk constructed from nickel-based superalloy Rene^{®} 88 (General Electric Co.) was placed into the tank and connected to the negative lead of a DC power supply. The platinum plating solution was heated to a temperature of from about 87°C to about 94°C and current was applied to achieve about 6200 amps/m² to about 12,400 amps/m² of test disk surface area. After from about 1 to about 2 hours, the platinum layer was deposited on the surface of the test disk in a thickness of from about 5.0µm to about 12.0µm.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method for coating a turbine engine rotor component (30) **characterized by**:
depositing at least one platinum group metal selected from the group consisting of platinum, palladium, rhodium, ruthenium, iridium and osmium on the rotor component; and
heating the rotor component (30) to a temperature of from 500°C to 800°C, preferably from 540°C to 815°C,

2. A method according to claim 1 wherein the rotor component (30) is selected from the group consisting of turbine disks (32), turbine seal elements (34) and turbine blade retainers (35) and wherein the platinum group metal is deposited by a method selected from the group consisting of metal plating, physical vapor deposition and chemical vapor deposition.

3. A method according to claim 1 or claim 2 wherein the deposited platinum group metal forms a coating (60) having a thickness of from 0.2µm to 50µm.

4. A method according to any preceding claim wherein the rotor component (30) is grit blasted prior to depositing the at least one platinum group metal thereon.

5. A method for protecting a turbine engine rotor component (30) **characterized by**:
providing a rotor component (30) selected from the group consisting of turbine disks (32), turbine seal elements (34) and turbine blade retainers (35);
depositing at least one platinum group metal selected from the group consisting of platinum, palladium, rhodium, ruthenium, iridium and osmium on the rotor component (30) by electroplating to form a coating (60) having a thickness of from 0.2µm to 50µm, preferably from 0.3µm to 10µm; and
heating the rotor component (30) to a temperature of from 500°C to 800°C and preferably from 540°C to 815°C.

6. A method according to any preceding claim wherein heating the rotor component (30) occurs in a nonoxidizing atmosphere.

7. A turbine engine rotor component (30) **characterized by**:
a) a metal-based substrate (64) selected from the group consisting of nickel-based substrates, cobalt-based substrates, iron-based substrates and combinations thereof; and
b) a platinum group metal coating (60) on a surface (62) of the substrate, the coating (60) having a thickness of from 0.2µm to 50µm;
wherein the platinum group metal coating (60) is formed by depositing at least one platinum group metal selected from the group consisting of platinum, palladium, rhodium, ruthenium, iridium and osmium on the surface (62) of the rotor component (30), and heating the rotor component (30) to a temperature of from 500°C to 800°C.

8. A rotor component (30) according to claim 7 wherein the rotor component (30) is selected from the group consisting of turbine disks (32), turbine seal elements (34) and turbine blade retainers (35).

9. A rotor component (30) according to claim 7 or claim 8 wherein the coating (60) is deposited by a method selected from the group consisting of metal plating, physical vapor deposition and chemical vapor deposition.

10. A rotor component (30) according to any one of claims 7, 8 or 9 wherein heating the rotor component (30) occurs in a nonoxidizing atmosphere.
